(19) Europäisches Patentamt
European Patent Office
Office européen des brevets

(11) EP 0 960 889 B1

(12) **EUROPÄISCHE PATENTSCHRIFT**

(45) Veröffentlichungstag und Bekanntmachung des Hinweises auf die Patenterteilung:
**23.07.2003 Patentblatt 2003/30**

(51) Int Cl.⁷: **C08F 2/24**, C09D 157/00

(21) Anmeldenummer: **99110034.8**

(22) Anmeldetag: **21.05.1999**

(54) **Phosphat- oder Phosphonatgruppen enthaltende Bindemittel für den Korrosionsschutz**

Phosphate or phosphonate containing binder for anti corrosive paints

Liant contenant des groupes phosphates ou phosphonates pour la protection contre la corrosion

(84) Benannte Vertragsstaaten:
**BE DE DK FR GB IT NL SE**

(30) Priorität: **29.05.1998 DE 19824087**

(43) Veröffentlichungstag der Anmeldung:
**01.12.1999 Patentblatt 1999/48**

(73) Patentinhaber: **BASF AKTIENGESELLSCHAFT**
**67056 Ludwigshafen (DE)**

(72) Erfinder:
- **Schlarb, Bernhard Dr.**
**67067 Ludwigshafen (DE)**
- **Wiese, Harm Dr.**
**69115 Heidelberg (DE)**
- **Wildburg, Gerald Dr.**
**67071 Ludwigshafen (DE)**
- **Rau, Maria Gyopar Dr.**
**67454 Hassloch (DE)**

(56) Entgegenhaltungen:
**EP-A- 0 221 498**
**EP-A- 0 469 372**
**EP-A- 0 727 441**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).



Printed by Jouve, 75001 PARIS (FR)

**Beschreibung**

Beschreibung

Die Erfindung betrifft eine wäßrige Polymerdispersion, erhältlich durch Emulsionspolymerisation eines Monomerengemisches A) enthaltend 50 bis 100 Gew.-% $C_1$-$C_{18}$ Alkyl(meth)acrylate, Vinylester, Vinylaromaten oder deren Gemische, in Gegenwart eines Schutzkolloids B), welches aufgebaut ist aus

$b_1$) 2 bis 40 Gew.-% ethylenisch ungesättigten, copolymerisierbarer Verbindungen (Monomere) mit mindestens einer Phosphat-oder Phosphonatgruppe

$b_2$) 0 bis 98 Gew.-% $C_1$ -$C_{18}$ Alkyl(meth)acrylaten, Vinylestern oder Vinylaromaten

$b_3$) 0 bis 50 Gew.-% weiteren Monomeren, wobei die Gewichtsangaben auf das Schutzkolloid bezogen sind.

Weiterhin betrifft die Erfindung Korrosionsschutzbeschichtungsmittel, welche die wäßrige Polymerdispersion enthalten.

Phosphatgruppen enthaltende Bindemittel für Korrosionsschutzbeschichtungsmittel sind z.B. aus EP-A-305850 und EP-A-221498 bekannt. Bei den Bindemitteln aus EP-A-305850 handelt es sich um Lösungspolymerisate, welche durch Polymerisation in einem organischen Lösungsmittel hergestellt und anschließend in Wasser dis-pergiert werden. Die Molgewichte derartiger Lösungspolymerisate sind im allgemeinen gering und ihre Polymerisate schon aus diesem Grund wenig geeignet für Beschichtungsmittel mit guten anwendungstechnischen Eigenschaften. Bei den Bindemitteln aus EP-A-221498 handelt es sich um Copolymerisate, die spezielle oberflächenaktive Phosphate mit Polyethergruppen als Comonomere enthalten.

Emulsionspolymerisate, die in Gegenwart eines Schutzkolloids hergestellt wurden, sind z.B. aus EP 727441 bekannt.

Gewünscht sind Bindemittel für den Korrosionsschutz, die mit einem geringen Gehalt an Phosphat- oder Phosphonatgruppen guten Korrosionsschutz bewirken.

Auf zusätzliche Korrosionsschutzpigmente soll gegebenenfalls verzichtet werden können. Die Polymerisate sollen möglichst einfach herstellbar sein, insbesondere sollen leicht zugängliche Monomere Verwendung finden. Die enthaltenen wäßrigen Polymerdispersionen 5 sollen stabil, und möglichst koagulatfrei sein, die erhaltenen Beschichtungen sollen gute anwendungstechnische Eigenschaften aufweisen, z.B. eine hohe Härte und Elastizität.

Die bisher bekannten Bindemittel für Korrosionsschutzbeschichtungen erfüllen diesen Anforderungen in noch nicht ausreichendem Maße.

Aufgabe der vorliegenden Erfindung waren daher Bindemittel für Korrosionsschutzbeschichtungen, welche die obigen unterschiedlichen Anforderungen möglichst gut erfüllen.

Demgemäß wurde die eingangs definierte Polymerdispersion und Korrosionsschutzbeschichtungsmittel, welche die Polymerdispersion enthalten, gefunden.

Die wäßrige Polymerdispersion wird vorzugsweise durch Emulsionspolymerisation des Monomerengemisches A) in Gegenwart eines Schutzkolloids B) hergestellt.

Der im nachfolgenden gebrauchte Begriff Monomer steht für radikalisch copolymerisierbare Verbindungen mit mindestens einer ethylenisch ungesättigten Gruppe.

Das Schutzkolloid enthält vorzugsweise 5 bis 35 Gew.-%, besonders bevorzugt 10 bis 20 Gew-.% der Monomeren $b_1$)

Das Schutzkolloid besteht insbesondere z.B. aus

5 bis 35 Gew.-%, besonders bevorzugt 10 bis 20 Monomere $b_1$)
60 bis 95 Gew.-% besonders bevorzugt 70 bis 90 Monomere $b_2$)
0 bis 30 Gew.-%, besonders bevorzugt 0 bis 20 Monomere $b_3$)

Die Gewichtsangaben sind jeweils auf das Schutzkolloid B) bezogen.

Monomere $b_1$) sind solche mit einer Phosphat oder Phosphonatgruppe und mindestens einer, vorzugsweise einer copolymerisierbaren ethylenisch ungesättigten Gruppe. Das Molgewicht geeigneter Monomere $b_1$) liegt vorzugsweise unter 1000 g/mol, besonders bevorzugt unter 500 g/mol und ganz besonders bevorzugt unter 280 g/mol. Bei Phosphatgruppen handelt es sich um Gruppen der Formel

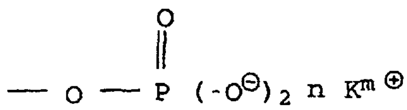

I

Bei Phosphonatgruppen handelt es sich um Gruppen der Formel

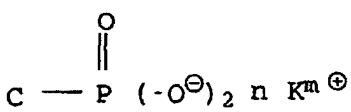

II

K steht in den obigen Formeln für ein Kation, n und m sind jeweils 1 oder 2, wobei das Produkt n · m = 2 ist. K kann z.B. ein Alkalimetall oder Ammonium sein.

Geeignete Monomere $b_1$) mit Phosphonsäuregruppen sind z.B.

Vinylphosphonsäure, 2-Methacrylamido-2-methylpropanphosphonsäure, Propen-2-phoshonsäure oder α-Phosphonostyrol.

Beispiele für Phosphorsäuregruppen-haltige Monomere sind Monoester der Phosphorsäure mit Verbindungen, die aus Diolen und Acrylsäure oder Methacrylsäure durch Einfachveresterung erhältlich sind, wie z.B. 2-Hydroxyethylmethacrylat, Hydroxypropyl(meth)acrylat, 4-Hydroxybutylacrylat und 2-Hydroxybutylacrylat.

Die Säuren werden vor oder während der Überführung des Schutzkolloids im die wäßrige Phase neutralisiert, d.h. in Salzgruppen überführt, wie weiter unter ausführlich beschrieben ist.

Als Monomere $b_2$) (Hauptmonomere) zu nennen sind z.B. (Meth)acrylsäurealkylester mit einem $C_1$-$C_9$-, insbesondere $C_1$-$C_8$-Alkylrest, wie Methylmethacrylat, Methylacrylat, n-Butylacrylat, Ethylacrylat, 2-Ethylhexylacrylat, n-Butylmethacrylat, Lauryl- oder Stearyl(meth)acrylat.

Insbesondere sind auch Mischungen der (Meth)acrylsäurealkylester geeignet.

Vinylester von Carbonsäuren mit 1 bis 20 C-Atomen sind z.B. Vinyllaurat, -stearat, Vinylpropionat und Vinylacetat.

Als vinylaromatische Verbindungen kommen Vinyltoluol, α- und p-Methylstyrol, α-Butylstyrol, 4-n-Butylstyrol, 4-n-Decylstyrol und vorzugsweise Styrol in Betracht.

Die Monomeren $b_2$) werden auch vorzugsweise im Gemisch eingesetzt.

Vinylaromatische Verbindungen wie Styrol werden z.B. häufig im Gemisch mit $C_1$-$C_{18}$-Alkyl(meth)acrylaten, insbesondere mit $C_1$-$C_8$-Alkyl(meth)acrylaten eingesetzt.

Weitere ethylenisch ungesättigte Monomere $b_3$) sind z.B. Hydroxylgruppen enthaltende Monomere wie Hydroxyalkyl(meth)acrylate, z.B. Hydroxypropyl- oder Hydroxyethyl(meth)acrylat, Amide oder substituierte Amide von äthylenisch ungesättigten Mono- oder Dicarbonsäuren, z.B. Acrylamid, Metrhacrylamid, N-Methylolacrylamid, N-Methylolmethacrylamid, sowie die mit $C_1$- bis $C_6$-einwertigen Alkoholen verätherten N-Methylolacrylamide und N-Methylolmethacrylamiden. Vernetzende Monomere, z.B. mit zwei Vinylgruppen können zwar auch mitverwendet werden, vorzugsweise enthält das Schutzkolloid B jedoch keine vernetzenden Monomeren oder allenfalls nur geringe Anteile dieser Monomeren, z.B. unter 0,2 Gew.-%, bezogen auf das Schutzkolloid B. Weitere Monomere $b_3$) sind auch solche mit Carbonsäure-, Sulfonsäure-, Säureanhydrid- oder Amidgruppen, welche zur emulgierenden Wirken des Schutzkolloids B) beitragen, eine Mitverwendung derartiger Monomere ist jedoch nicht erforderlich, da Monomere $b_1$) ausreichend emulgierend wirken.

Zu nennen sind weiterhin Nitrile, Vinylhalogenide und nicht aromatische Kohlenwasserstoffe.

Das gewichtsmittlere Molekulargewicht ($M_w$) des Schutzkolloids B) liegt vorzugsweise über 10.000, besonders bevorzugt beträgt es über 20.000 bis 200.000 und ganz besonders bevorzugt 40.000 bis 120.000 (bestimmt durch Gelpermeationschromatographie, mit Polystyrol als Standard und Tetrahydrofuran als Elutionsmittel).

Die Herstellung des Schutzkolloids B) kann z.B. durch Substanzpolymerisation, also lösungsmittelfrei oder vorzugsweise durch Lösungspolymerisation erfolgen.

Die durch Substanz- oder Lösungspolymerisation hergestellten Schutzkolloid B) sind bevorzugt, da die Polymerisate gleichmäßiger aufgebaut sind und einen hydrophoben (öllöslichen) Initiator eingebaut enthalten.

Als Lösungsmittel eignen sich z.B. solche mit einem Siedepunkt unter 100°C bei 1 bar oder solche, die mit

Wasser ein Azeotrop bilden, welche aus der wäßrigen Polymerdispersion, soweit gewünscht, leicht destillativ abgetrennt werden können. Als Lösungsmittel können günstigerweise auch sogenannte Filmbildehilfsmittel, wie Butylglycol, Butyldigylcol oder Butoxypropanol verwendet werden. Ein späterer Zusatz dieser Hilfsmittel kann sich so erübrigen.

Als Lösungsmittel genannt seien z.B. Butanol, Isobutanol, Propanol, Ethanol, Methanol und Methylethylketon.

Die Polymerisation der ethylenisch ungesättigten Monomeren kann z.B. in bekannter Weise durch anionische oder vorzugsweise radikalische Polymerisation vorzugsweise in Gegenwart von Initiatoren erfolgen. Als radikalbildende Initiatoren genannt seien z.B. Azobiscarbonsäureamide, Azobiscarbonsäurenitrile, Persäureester oder Peroxide. Die Menge des Initiators beträgt vorzugsweise 0,2 bis 5, besonders bevorzugt 0,5 bis 3 Gew.-%, bezogen auf die Monomeren. Die Polymerisationstemperatur beträgt vorzugsweise 50 bis 150°C, besonders bevorzugt 80 bis 130°C. Gegebenenfalls können auch Regler, z.B. Mercaptoethanol, Tertiärdodecylmercaptan oder Diisopropylxanthogensulfid, vorzugsweise in Mengen von 0 bis 3 Gew.-%, bezogen auf die Monomeren, zugesetzt werden.

Die Herstellung des Schutzkolloids B) kann z.B. auch einstufig oder mehrstufig erfolgen. Insbesondere kann z.B. zunächst ein Polymer mit einem hohen Säureanteil und in dessen Gegenwart dann ein Polymer mit einem geringeren Säureanteil (bzw. Säurezahl = 0) hergestellt werden, wie es z.B. in EP-A 320 865 beschrieben ist.

Bei der vorliegenden Erfindung ist jedoch eine solche mehrstufige Herstellung nicht notwendig, so daß die einstufige Herstellung bevorzugt ist. Bei der Polymerisation können die Monomeren vor-gelegt oder auch (bevorzugt) kontinuierlich zudosiert werden.

Das Schutzkolloid B) wird als Dispersion oder vorzugsweise Lösung in dem organischen Lösungsmittel erhalten. Der Feststoffgehalt beträgt vorzugsweise 50 bis 95, insbesondere 60 bis 85 Gew.-%.

Das Schutzkolloid B) wird dann als Schutzkolloid bei der Emulsionspolymerisation verwendet.

Das Schutzkolloid B) kann in Form seiner organischen Lösung, z.B. im Falle der Lösungspolymerisation, oder auch lösemittelfrei, z.B. im Falle der Substanzpolymerisation, verwendet werden. Es kann aber auch zunächst in eine wäßrige Dispersion oder Lösung überführt werden, wobei Lösungsmittel gegebenenfalls abdestilliert wird.

Das Schutzkolloid B) kann bei der Emulsionspolymerisation in Was-ser vorgelegt werden und/oder während der Emulsionspolymerisation zugesetzt werden.

Die Säuregruppen bzw. Anhydridgruppen des polymeren Schutzkolloids werden vor oder während der Überführung in die wäßrige Phase ganz oder teilweise in Salzgruppen überführt,d.h. neutralisiert.

Geeignete Neutralisationsmittel sind zum einen Mineralbasen wie Natriumcarbonat oder Kaliumcarbonat sowie Ammoniak, zum anderen organische Basen wie zum Beispiel Aminoalkohole speziell 2-Amino-2-methyl-1-propanol (AMP), Triethanolamin, Triisopropanolamin (TIPA), Monoethanolamin, Diethanolamin, Tri[(2-hydroxy) 1-propyl]amin, 2-Amino-2-methyl-1,3-propandiol (AMPD) oder 2-Amino-2-hydroxymethyl, 1,3-Propandiol sowie Diamine wie zum Beispiel Lysin. Besonders bevorzugt ist Ammoniak als Neutralisierungsmittel.

Der Gewichtsanteil des Schutzkolloids B) beträgt vorzugsweise 5 bis 40 Gew.-Teile, besonders bevorzugt 5 bis 25 Gew.-Teile, bezogen auf 100 Gew.-Teile des Monomerengemisch A.

Bei der Emulsionspolymerisation werden keine weiteren Emulgatoren, Schutzkolloide oder sonstige Dispergierhilfsmittel mehr benötigt und daher vorzugsweise auch nicht eingesetzt.

Bei den zu polymerisierenden Monomeren des Monomerengemisch A) handelt es sich im wesentlichen um die bereits voranstehend genannten Monomere $b_1$) bis $b_3$), wobei als Monomere $b_2$ auch aliphatische Kohlenwasserstoffe mit 2 bis 8 C-Atomen und zwei Doppelbindungen und als Monomere $b_3$) auch vernetzende Monomere, wie Butandioldiacrylat und Divinylbenzol geeignet sind.

Das Monomerengemisch A) besteht vorzugsweise zu 60 bis 100, besonders bevorzugt zu 70 bis 100 Gew.-% ganz besonders bevorzugt zu 80 bis 100 Gew.-% aus den Monomeren $b_2$) (Hauptmonomere).

Monomere $b_1$) können, müssen jedoch keinesfalls, mitverwendet werden, ihr Anteil liegt jedoch im allgemeinen jeweils unter 10 Gew.-%, bevorzugt unter 5 Gew.-% und besonders bevorzugt unter 3 Gew.-%.

Weitere Monomere $b_3$) können ebenfalls mitverwendet werden. z.B. in Mengen von 0 bis 40 Gew.-%, bevorzugt 0 bis 30 Gew.-%, besonders bevorzugt 0 bis 20 Gew.-%. Die Gewichtsangaben sind auf das Monomerengemisch A) bezogen.

Die Glasübergangstemperatur (Tg) des Polymeren, welches aus dem Monomerengemisch A aufgebaut ist) beträgt vorzugsweise 0 bis 100°C, besonders bevorzugt 5 bis 70°C.

Die Tg wird dabei nach Fox aus der Tg der von den Monomeren des Monomergemischs A gebildeten Homopolymeren berechnet. (T.G. Fox, Bull. Am.Phys. Soc. Ser II, 1 (1956)123)

$$\frac{1}{Tg} = \frac{X_A}{Tg(A)} + \frac{{}_X{}^B}{Tg(B)} + ....$$

$Tg_{(A),(B)}$: Tg des Homopolymeren aus Monomeren (A), bzw (B)

$X_A$, $X_B$: Massenbruch des Monomeren (A), (B)

Die Emulsionspolymerisation kann in üblicher Weise z.B. bei Temperaturen von 30 bis 95°C in Gegenwart eines wasserlöslichen Initiators durchgeführt werden.

Geeignete Initiatoren sind z.B. Natrium-, Kalium- und Ammoniumpersulfat, tert.-Butylhydroperoxide, wasserlösliche Azoverbindungen oder auch Redoxinitiatoren.

Im Falle von Wasserstoffperoxid als Initiator werden vorzugsweise geringe Mengen Cu(II) oder Fe(III) als Katalysator mitverwendet.

Die nach der Emulsionspolymerisation erhaltene, erfindungsgemäße, wäßrige Polymerdispersion hat vorzugsweise einen Feststoffgehalt von 10 bis 65, vorzugsweise von 30 bis 60, und besonders bevorzugt von 40 bis 55 Gew.-%.

Die erfindungsgemäßen wäßrigen Dispersionen eignen sich als Beschichtungsmittel, Imprägnierungsmittel oder Klebstoffe. Sie können für die jeweilige Verwendung übliche Zusatzstoffe enthalten, z.B. Entschäumer, Verlaufsmittel, Pigmente, Füllstoffe oder Farbstoffe, Verdickungsmittel etc.

Sie können als Beschichtungsmittel z.B. zur Beschichtung von Substanzen z.B. aus Metall, Holz, Stein, Papier oder Kunststoff, als Vliesstoffbindemittel zum Imprägnieren bzw. binden von gewebten oder ungewebten Fasern Verwendung finden.

Bei den erfindungsgemäßen Polymerdispersionen handelt es sich insbesondere um physikalisch trocknende Systeme, das heißt, die Systeme werden als Beschichtungsmassen aufgetragen und bei Raumtemperatur getrocknet (23°C), eine Temperaturerhöhung über Raumtemperatur bzw. über 50°C erfolgt nicht.

Die wäßrige Polymerdispersion eignet sich insbesondere als Bindemittel für Korrosionsschutzbeschichtungsmittel. Erfindungsgemäße Korrosionsschutzbeschichtungsmittel können allein aus den Bindemittel, d.h. der wäßrigen Polymerdispersion bestehen.

Weitere Bestandteile können die oben genannten Zusatzstoffe und insbesondere Korrosionsschutzpigmente z.B. Barriere-Pigmente, wie Eisenglimmer, Aluminium-Pigmente oder aktive Korrosionsschutz-Pigmente, z.B. Zinkphosphat sein. Barrierepigmente behindern die Diffusion von Wasser oder Sauerstoff in die Lackschicht. Aktive Korrosionsschutz-Pigmente unterbinden den Korrosionsprozess elektronisch.

Ein Vorteil der wäßrigen Polymerdispersionen ist jedoch, daß auch mit geringen Mengen Korrosionsschutzpigmenten oder auch ganz ohne aktive Korrosionsschutzpigmente oder Korrosionsschutzpigmente generell bereits ein guter Korrosionsschutz, d.h. insbesondere kaum Unterrostung und Blasenbildung in der Beschichtung erreicht werden. Soweit Korrosionsschutzpigmente verwendet werden, beträgt ihr Anteil 10 bis 100 gew. Teile, bezogen auf 100 gew. Teile erhaltenes Polymer (Summe aus Schutzkolloid B und polymerisiertem Monomerengemisch A).

Die erfindungsgemäßen wäßrigen Polymerdispersionen sind stabil und enthalten kaum Koagulat. Die mit den erfindungsgemäßen Polymerdispersionen erhaltenen Beschichtungen haben gute anwendungstechnische Eigenschaften, insbesondere eine hohe Härte und Elastizität.

Beispiele

A) Herstellung des Schutzkolloids B) durch Lösungspolymerisation (siehe Tabelle 1)

In einen Glaskolben, der mit Rückflußkühler, Ankerrührer, 2 Tropftrichtern und thermostatisiertem Ölbad ausgestattet war, wurde die Vorlage in einer Stickstoffatmosphäre unter Rühren auf eine Temperatur von 105°C aufgeheizt. Nach Erreichen der Temperatur wurde Zulauf 2 gestartet und innerhalb von 6 Stunden zudosiert. 15 min nach Start von Zulauf 2 wurde Zulauf 1 gestartet und innerhalb von 4 Stunden zudosiert.

Nachdem der Zulauf 2 vollständig zudosiert worden war, wurde zur Vervollständigung der Polymerisation noch 2 Stunden bei 105°C weitergerührt. Dann wurde die Polymerlösung auf 80°C abgekühlt und durch Einrühren von Zulauf 3 innerhalb von 20 min. neutralisiert. Anschließend wurde bei einer konstanten Außentemperatur von 80°C der Zulauf 4 innerhalb von 1 Stunde eingerührt.

Bei dem erfindungsgemäßen Beispiel enthält das Schutzkolloid 15 Gew.-% Vinylphosphonsäure. Das Vergleichsbeispiel enthält die äquimolare Menge Acrylsäure, nämlich 10 Gew.-%.

B) Herstellung der wäßrigen Dispersion durch Emulsionspolymerisation (siehe Tabelle 2).

Die Vorlage wurde unter Stickstoff auf die Polymerisationstemperatur von 85°C erhitzt. Währenddessen wurde Zulauf 1 innerhalb von 15 min. zudosiert. Dann wurden 8,5 g von Zulauf 3 innerhalb von 2 Stunden und Zulauf 3 innerhalb von 2,5 Stunden zudosiert. Anschließend wurde noch 1 Stunde lang bei der Polymerisationstemperatur weitergerührt. Dann wurde die Dispersion filtriert (500 µm Maschenweite).

Tabelle 1

| Herstellung des Schutzkolloids | | |
|---|---|---|
| | V1 zum Vergleich | 1 |
| Zusammensetzung in Gew.-% | | |
| Acrylsäure | 10 | 0 |
| Vinylphosphonsäure | 0 | 15 |
| n-Butylacrylat | 60 | 56,7 |
| Methylmethacrylat | 30 | 28,3 |
| | | |
| Vorlage: | | |
| Isobutanol | 136 g | 136 g |
| Teilmenge von Zulauf 1 | 144 g | 146 g |
| Zulauf 1: | | |
| Acrylsäure | 80 g | - |
| Vinylphosphonsäure | - | 133,3 g (90 %ig) |
| n-Butylacrylat | 480 g | 453,4 g |
| Methylmethacrylat | 240 g | 226,6 g |
| | | |
| Zulauf 2: | | |
| Isobutanol | 192 g | 192 g |
| tert.-Butylperoctoat | 16 g | 16 g |
| | | |
| Zulauf 3: | | |
| Wäßrige Ammoniaklösung (25 Gew.-%ig) | 75,6 g | 151,1 g |
| | | |
| Zulauf 4: | | |
| Wasser | 1600 g | 1600 g |
| | | |
| Produkt: | | |
| Feststoffgehalt [%] | 29,3 | 27,1 |
| pH-Wert | 8,7 | 8,9 |
| Isobutanolgehalt [%] | 11,6 | 11,3 |
| Ausssehen | klar | trüb |

Tabelle 2

| Herstellung der Polymerdispersion | | | | | |
|---|---|---|---|---|---|
| Beispiel | D1 * | D2 * | D3 | D4 | D5 |
| Vorlage: | | | | | |
| Lösung V1 | 512 g | 512 g | | | |
| Lösung 1 | | | 553,6 g | 553,6 g | 553,6 g |
| | | | | | |
| Zulauf 1: | | | | | |
| Wasser | 675 g | 675 g | 675 g | 675 g | 675 g |
| Kupfervitriol | 0,02 g | 0,02 g | 0,02 g | 0,02 g | 0,02 g |
| | | | | | |
| Zulauf 2: | | | | | |
| n-Butylacrylat | 385 g | 350 g | 385 g | 350 g | 315 g |
| Styrol | 465 g | 500 g | 465 g | 500 g | 535 g |
| | | | | | |
| Zulauf 3: | | | | | |
| Wasserstoffperoxid (12 %ig) | 83 g | 83g | 83 g | 83 g | 83 g |
| | | | | | |
| Dispersion: | | | | | |
| | | | | | |
| Feststoffgehalt [%] | 47,2 | 46,6 | 46,5 | 46,3 | 47,2 |
| pH-Wert | 8,3 | 8,4 | 8,1 | 8,2 | 8,0 |
| Isobutanolgehalt [%] | 2,9 | 2,9 | 2,9 | 2,9 | 2,9 |
| LD-Wert ** | 50 | 48 | 47 | 46 | 36 |

* zum Vergleich

**LD-Wert: Trübung der Dispersion oder Lösung mit 0,01 Gew.-% Polymergehalt im Verhältnis zu Wasser, bestimmt durch Messung des Photostroms. Der Wert gibt die Lichtdurch-lässigkeit in % an (je größer der LD-Wert, desto kleiner die Polymerteilchen.

C) Herstellung der Beschichtungsmittel (s. Tabelle 3)

Tabelle 3:

| Formulierung der Korrosionsschutzbeschichtungsmittel angegeben sind Gewichtsteile | | | | | |
|---|---|---|---|---|---|
| Polymerdispersion, Typ | D1 | D2 | D3 | D4 | D5 |
| Polymerdispersion, Gew.Tl | 95,2 | 96,5 | 96,7 | 97,1 | 95,2 |
| Surfynol 104, 50 %ig in n-Propanol[1] | 1,2 | 1,2 | 1,2 | 1,2 | 1,2 |
| Agitan 260[2] | 0,6 | 0,6 | 0,6 | 0,6 | 0,6 |
| Wasser | 11,7 | 11,7 | | | |

[1] Entschäumer (Air Products)

[2] Entschäumer (Münzing-Chemie)

Tabelle 3: (fortgesetzt)

| Formulierung der Korrosionsschutzbeschichtungsmittel angegeben sind Gewichtsteile | | | | | |
|---|---|---|---|---|---|
| Polymerdispersion, Typ | D1 | D2 | D3 | D4 | D5 |
| Pigmentverteiler (LR8807) | 1,46 | 1,46 | - | - | - |
| Wäßr. Ammoniaklsg. (25 %ig) | 2,19 | 2,19 | 2,4 | 1,55 | 0,87 |
| Aerosil 200[3] | 0,48 | 0,48 | 0,48 | 0,48 | 0,48 |
| Bayferrox 130 M[4] | 29,9 | 29,9 | 29,9 | 29,9 | 29,9 |
| Millicarb[5] | 47,8 | 47,8 | 47,8 | 47,8 | 47,8 |
| | | | | | |
| Die Zutaten werden mit Glasperlen versetzt und 20.Min lang im Disolver verrührt. Dann wird folgendes eingerührt: | | | | | |
| | | | | | |
| Polymerdispersion | 47,1 | 47,7 | 47,8 | 48,0 | 47,0 |
| Agitan 260 | 0,6 | 0,6 | 0,6 | 0,6 | 0,6 |
| Solvesso 100[6] | 3,4 | 3,4 | 3,4 | 11,8 | 16,4 |
| | | | | | |
| Nach 1 Tag Wartezeit wird der Lack durch Zugabe eines Verdickers und Wasser auf die gewünschte Viskosität von ca. 300mPas eingestellt: | | | | | |
| | | | | | |
| Polyether-Verdicker | 1,3 | 1,3 | 1,56 | 1,1 | 0,6 |
| Wasser | 65,9 | 75,8 | 51,4 | 33,9 | 67,9 |
| Die erfindungsgemäßen Dispersionen wurden ohne Pigmentverteiler formuliert. Die Lacke der Vergleichsbeispiele mußten mit Pigment-verteiler formuliert werden, da ohne Pigmentverteiler nur poröse, ungeeignete Lackfilme erhältlich waren, die im Salzsprühtest nicht geprüft werden konnten. | | | | | |

[3] Silikat (Degussa)
[4] Eisenoxid (Bayer)
[5] Calziumcarbonat (Omya)
[6] Filmbildehilfsmittel

D) Anwendungstechnische Prüfung

Die so hergestellten Lacke wurden mit Hilfe einer Handspritzpistole durch Spritzen auf Stahlbleche aufgetragen, wobei die Trockenschichtdicke des Lacks 80 µm betrug. Die beschichteten Bleche wurden 7 Tage lang bei Raumtemperatur und anschließend 1 Tag bei einer Temperatur von 50°C getrocknet. Als Substrat diente Eisenblech (ST 1405) (gereinigt mit Essigester). Der getrocknete Lack wurde mit Hilfe eines Messers durch Ritzen beschädigt. Der Salzsprühtest erfolgte nach der DIN 53 167. Die Ergebnisse sind in der folgenden Tabelle zusammengestellt:

Tabelle 4:

| Zusammensetzung der Beschichtungsmittel und Prüfergebnisse (Salzsprühtest, nach 120 Stunden Belastung. Schicht- dicke 80 µm (trocken)). | | | | | |
|---|---|---|---|---|---|
| | D1* | D2 * | D3 | D4 | D5 |
| Schutzkolloid | | | | | |

* zum Vergleich

Tabelle 4: (fortgesetzt)

| Zusammensetzung der Beschichtungsmittel und Prüfergebnisse (Salzsprühtest, nach 120 Stunden Belastung. Schicht- dicke 80 µm (trocken)). | | | | | |
|---|---|---|---|---|---|
| | D1* | D2 * | D3 | D4 | D5 |
| Acrylsäure | 10 | 10 | | | |
| Vinylphosphonsäure | | | 15 | 15 | 15 |
| Butylacrylat | 60 | 60 | 57 | 57 | 57 |
| Metylmethacrylat | 30 | 30 | 28 | 28 | 28 |
| Schutzkolloidmenge [Gew.-%] | 15 | 15 | 15 | 15 | 15 |
| Emulsionspolymerisation: | | | | | |
| Styrol | 55 | 59 | 55 | 59 | 63 |
| Butylacrylat | 45 | 41 | 45 | 41 | 37 |
| Beurteilung der lackierten Bleche nach 120 h Salzsprüh-test: | | | | | |
| Blasen [%]** | 60 | 80 | 0 | 0 | 0 |
| Auswaschung am Ritz [Note]*** | 4 | 4 | 3 | 3 | 3 |
| Unterwanderung am Ritz [Note]**** | 4-5 | 5 | 3 | 3-4 | 3 |

* zum Vergleich
** Prozent der Oberfläche mit Blasen
*** Auswaschen am Ritz: beurteilt wird das Auswaschen von Rost, erkennbar an Braunfärbung der Umgebung des Ritzes: Note 0-5
O = kein Auswaschen,
5 = starkes Auswaschen
**** Unterwanderung am Ritz 0-5 (erkennbar an Verformung der Lackoberfläche):
0 = keine Unterwanderung des Lackes mit Rost
5 = starke Unterwanderung des Lackes mit Rost

Die Korrosionsschutzlacke auf Basis des erfindungsgemäßen Bindemittel zeigen im Salzsprühtest keine Blasenbildung, ein geringeres Auswaschen von Rost und eine geringere Unterwanderung am Ritz.

E) Weitere Vergleichsbeispiele

Zum Vergleich mit den erfindungsgemäßen Dispersionen wurden Dispersionen durch Emulsionspolymerisation hergestellt. Dabei wurde die Vinylphosphonsäure als Comonomer in der Emulsionspolymerisation eingesetzt. Die Monomerzusammensetzung dieser Vergleichsversuche entspricht der der erfindungsgemäßen Beispiele.

| Vergleichs-Beispiel Nr. | E 1 | E 2 | E 3 |
|---|---|---|---|
| | | | |
| Zulauf 1: | | | |
| Lutensit AEP (20 %ig in Wasser) | 31,5 g | 31,5 g | 31,5 g |
| Wasser | 250 g | 250 g | 250 g |
| Vinylphosphonsäure | 14,1 g | 14,1 g | 18,8 g |
| Methylmethacrylat | 26,6 g | 26,6 g | - |
| n-Butylacrylat | 293,8 g | 271,9 g | 262,5 g |
| Styrol | 290,7 g | 312,5 g | 343,8 g |
| | | | |
| Monomerzusammensetzung Gew.-% | | | |
| Vinylphosphonsäure | 2,25 | 2,25 | 3 |

(fortgesetzt)

| Vergleichs-Beispiel Nr. | E 1 | E 2 | E 3 |
|---|---|---|---|
| Zulauf 1: | | | |
| Methylmethacrylat | 4,25 | 4,25 | - |
| n-Butylacrylat | 47 | 43,5 | 42 |
| Styrol | 46,5 | 50 | 55 |
| | | | |
| Koagulat nach Emulsionspolymerisation Gew.-%, bezogen auf Festgehalt | 16 | 100 | 100 |
| | | | |

Fahrweise: Die Vorlage, bestehend aus 9,5 g Lutensit AEP (20 %ig in Wasser) und 400 g Wasser wurde in einer Stickstoffatmosphäre unter Rühren auf 84°C erhitzt. Dann wurden 5 % von Zulauf1 und 5 % von Zulauf 2, bestehend aus 3,1 g Natriumperoxodisulfat und 75 g Wasser, innerhalb von 2 Minuten zugegeben. Die Mischung wurde unter gleichzeitigem Aufheitzen auf 95° C 15 Minuten lang anpolymerisiert. Dann wurden bei 95°C die Reste von Zulauf 1 und 2 innerhalb von 2 Stunden zudosiert und 1 Stunde nachpolymerisiert. Dann wurde die Dispersion durch Einrühren von 17,5 g wäßriger Ammoniaklösung (25 %ig) neutralisiert, abgekühlt und über ein 500µm-Sieb filtriert.
Lutensit AEP: Saurer Phosphorsäureester eines Fettalkoholalkoxylats der BASF AG. Der Emulgator wurde für die oben beschriebenen Versuche mit Ammoniak neutralisiert.
Die 3 Vergleichsbeispiele sind für eine Prüfung als Korrosionsschutz-Bindemittel nicht geeignet.

**Patentansprüche**

1. Wäßrige Polymerdispersion, erhältlich durch Emulsionspolymerisation eines Monomerengemisches A) enthaltend 50 bis 100 Gew.-% $C_1$-$C_{18}$ Alkyl(meth)acrylate, Vinylester, Vinylaromaten oder deren Gemische, in Gegenwart eines Schutzkolloids B), welches aufgebaut ist aus

   $b_{1)}$ 2 bis 40 Gew.-% ethylenisch ungesättigten, copolymerisierbarer Verbindungen (Monomere) mit mindestens einer Phosphat-oder Phosphonatgruppe

   $b_2$) 0 bis 98 Gew.-% $C_1$ -$C_{18}$ Alkyl(meth)acrylaten, Vinylestern und/oder Vinylaromaten

   $b_3$) 0 bis 50 Gew.-% weiteren Monomeren, wobei die Gewichtsangaben auf das Schutzkolloid bezogen sind.

2. Polymerdispersion gemäß Anspruch 1, **dadurch gekennzeichnet, daß** der Gehalt des Schutzkolloids B) 5 bis 40 Gewichtsteile, bezogen auf 100 Gewichtsteile Monomerengemisch A) beträgt.

3. Polymerdispersion gemäß Anspruch 1 oder 2, **dadurch gekennzeichnet, daß** der Gehalt an Monomeren $b_1$) 5 bis 35 Gew.-% bezogen auf das Schutzkolloid beträgt.

4. Korrosionsschutzbeschichtungsmittel, enthaltend als Bindemittel eine Polymerdispersion gemäß einem der Ansprüche 1 bis 3

5. Korrosionschutzbeschichtungsmittel gemäß Anspruch 4 enthaltend keine aktiven Korrosionschutzpigmente

6. Mit einem Korrosionsschutz Beschichtungsmittel gemäß einem der Ansprüche 4 oder 5 beschichtete Substrate.

**Claims**

1. An aqueous polymer dispersion obtainable by emulsion polymerization of a monomer mixture A) comprising from 50 to 100% by weight of $C_1$-$C_{18}$ alkyl (meth)acrylates, vinyl esters, vinylaromatic compounds, or mixtures thereof, in the presence of a protective colloid B) composed of

$b_1$) from 2 to 40% by weight of ethylenically unsaturated copolymerizable compounds (monomers) having at least one phosphate or phosphonate group

$b_2$) from 0 to 98% by weight of $C_1$-$C_{18}$ alkyl (meth)acrylates, vinyl esters and/or vinylaromatic compounds

$b_3$) from 0 to 50% by weight of further monomers, the amounts by weight being based on the protective colloid.

**2.** A polymer dispersion as claimed in claim 1, wherein the content of the protective colloid B) is from 5 to 40 parts by weight, based on 100 parts by weight of monomer mixture A).

**3.** A polymer dispersion as claimed in claim 1 or 2, wherein the content of monomers $b_1$) is from 5 to 35% by weight, based on the protective colloid.

**4.** An anticorrosion coating composition comprising as binder a polymer dispersion as claimed in any of claims 1 to 3.

**5.** An anticorrosion coating composition as claimed in claim 4 containing no active anticorrosion pigments.

**6.** A substrate coated with an anticorrosion coating composition as claimed in either of claims 4 and 5.

**Revendications**

**1.** Dispersion polymérique aqueuse, pouvant être obtenue par polymérisation en émulsion d'un mélange de monomères A) contenant 50 à 100 % en poids de (méth)acrylates d'alkyle en C1-C18, d'esters vinyliques, de vinylaromatiques ou leurs mélanges, en présence d'un colloïde protecteur B) qui est constitué de:

b.1) 2 à 40 % en poids de combinaisons éthyléniquement insaturées, copolymérisables (monomères) avec au moins un groupe phosphate ou phosphonate,
b.2) 0 à 98 % en poids de (méth)acrylates d'alkyle en C1-C18, d'esters vinyliques et/ou de vinylaromatiques,
b.3) 0 à 50 % en poids d'autres monomères, les indications pondérales se rapportant au colloïde protecteur.

**2.** Dispersion polymérique selon la revendication 1, **caractérisée en ce que** la teneur du colloïde protecteur B) représente 5 à 40 parties en poids par rapport à 100 parties en poids du mélange de monomères A).

**3.** Dispersion polymérique selon la revendication 1 ou 2, **caractérisée en ce que** la teneur en monomères bl) représente 5 à 35 % en poids par rapport au colloïde protecteur.

**4.** Produit de revêtement anti-corrosion, contenant comme liant une dispersion polymérique selon l'une quelconque des revendications 1 à 3.

**5.** Produit de revêtement anti-corrosion selon la revendication 4 ne contenant pas de pigments de protection anti-corrosion actifs.

**6.** Substrat revêtu d'un produit de revêtement anti-corrosion selon l'une ou l'autre des revendications 4 ou 5.